# EUROPÄISCHE PATENTANMELDUNG

(11) **EP 0 564 969 A1**
(43) Veröffentlichungstag der Anmeldung: **13.10.1993**
(21) Anmeldenummer: 93105319.3
(22) Anmeldetag: 31.03.1993
(51) Int. Cl.: B65D 88/30, B65D 90/14

(54) **Mehrwegverpackung für fliess- und/oder rieselfähige Massengüter**

(30) Priorität: 04.04.1992 DE 4211396
(71) Anmelder: Bock, Normann, D-28857 Syke (DE)
(72) Erfinder: Bock, Normann, D-28857 Syke (DE)
(74) Vertreter: Jabbusch, Wolfgang, Dr.Jur. Jabbusch, Wehser & Lauerwald Patentanwälte

(57) **Zusammenfassung**

Eine Mehrweg-Verpackung für fließ- und/oder rieselfähige Massengüter ist als einen Silokörper (1) mit Standbeinen (3) und unterem Auslauf (2) aufweisender Silo ausgebildet, wobei jedes Standbein aus einem vom Silokörper nach unten vorstehenden Grundabschnitt (4) und wenigstens einem Verlängerungsabschnitt (5) besteht. Es sind Abstützelemente (8) für einen auf den Silo stellbaren zweiten Silo vorgesehen, und die Höhe eines Silos mit Standbein-Grundabschnitten (4) ist so bemessen, daß bei einem aus wenigstens zwei aufeinandergestellten Silos gebildeten Stapel dessen Gesamthöhe nicht mehr als etwa 3,7 m ist. Eine vom Silokörper mit den Grundabschnitten eingenommene Grundfläche weist Kanten von nicht mehr als 1,2 m Länge (Palettenmaß) auf.

## Beschreibung

Die Erfindung betrifft eine Mehrwegverpackung für fließ- und/oder rieselfähige Massengüter.

Insbesondere im Baugewerbe wird eine Vielzahl von fließ- und/oder rieselfähigen Massengütern verwendet. Es sind dies z.B. Trockensubstanzen für das Anmischen verarbeitungsfertiger Mörtel, Estriche, Putze, Verfugungsmassen und dergleichen. Derartige Massengüter werden häufig kiloweise in Säcken abgepackt, auf Paletten gestapelt, mit einer Umverpackung, beispielsweise einer Schrumpfhaube, versehen und so in den Handel gebracht. Gesetzliche Vorschriften zwingen den Lieferanten der verpackt versandten Massengüter, die leeren Verpackungen, die Umverpackungen sowie die Paletten vom Endverbraucher zurückzunehmen und einer geeigneten Entsorgung oder Wiederverwendung zuzuführen. Für die Rückführung von Paletten sind häufig im einschlägigen Gewerbe bereits entsprechende Einrichtungen und organisatorische Maßnahmen getroffen. Auf die Rückführung von Verpackungen für kleinere Gebinde, die von einer Vielzahl von Endverbrauchern erworben und verarbeitet werden, sind Lieferanten von fließ- und/oder rieselfähigen Massengütern jedoch nicht vorbereitet und haben mit erheblichen Kosten für entsprechende Einrichtungen und organisatorische Maßnahmen zu rechnen, die keineswegs über höhere Produktpreise an die Endverbraucher weitergegeben werden können.

Auch für die chemische Industrie, z.B. Hersteller und Lieferanten von Kunststoffgranulaten, Düngemitteln und dergleichen, besteht, soweit derartige Produkte in Säcken, Eimern, Kanistern und dergleichen kleineren Gefäßen zum Versand gebracht werden, das Problem der Rückführung.

Der größte Teil der heute noch in Säcken, Fässern und dergleichen verpackten rieselfähigen Massengüter wird von gewerblichen Anwendern, z.B. Estrichlegern, Maurern, Fliesenlegern und dergleichen verbraucht, so daß in diesem Bereich auch der größte Teil der zurückzuführenden Verpackungen anfallen wird.

Der Erfindung liegt die Aufgabe zugrunde, eine Mehrwegverpackung für fließ- und/oder rieselfähige Massengüter bereitzustellen, die es ermöglicht, die Aufwendungen für den Transport leerer Verpackungen vom Endverbraucher zurück zum Hersteller und Lieferanten zu vermindern.

Diese Aufgabe ist erfindungsgemäß dadurch gelöst, daß die Verpackung als einen Silokörper mit Standbeinen und unterem Auslauf aufweisender Silo ausgebildet ist, wobei jedes Standbein aus einem vom Silokörper nach unten vorstehenden Grundabschnitt und wenigstens einem Verlängerungsabschnitt besteht und wobei Abstützelemente für einen auf den Silo stellbaren zweiten Silo vorgesehen sind und daß die Gesamthöhe eines Silos mit Standbein-Grundabschnitten so bemessen ist, daß bei einem aus wenigstens zwei aufeinandergestellten Silos gebildeten Stapel dessen Gesamthöhe nicht mehr als etwa 3,7 m ist.

Ein Silo ist ideal als Mehrwegverpackung geeignet, da ein leerer Silo immer wieder gefüllt und zwischen Endverbraucher und Füllgutlieferant hin- und hertransportiert werden kann. Dies wird mit Großsilos, die auf Großbaustellen z.B. für die Bereitstellung von Mörtelmischungen eingesetzt werden, auch bereits durchgeführt. Die Erfindung bezweckt jedoch eine Mehrwegverpackung, die bisher übliche Säcke, Umverpackungen und Paletten, also Gebinde mit relativ geringen Mengen, ersetzen kann. Dies wird bei der erfindungsgemäßen Verpackung gewährleistet durch eine Ausbildung als stapelbarerSilo. Die erfindungsgemäßen, als Silo ausgebildeten Verpackungen können insbesondere im leeren Zustand auf dem Rückweg zum Lieferanten der Massengüter aufeinandergestapelt werden, so daß die zur Verfügung stehende Transportkapazität, beispielsweise eines Lastkraftwagens, besser ausgenutzt ist. Selbstverständlich kann auch ein Stapel aus gefüllten Silos gebildet sein.

Bei einem Silo ist die Höhe des Auslaufs über dem Erdboden vorgeschrieben. Erreicht wird die notwendige Höhe des Auslaufs durch entsprechend lange Standbeine. Das steht jedoch der Bildung eines Stapels für den Transport entgegen, da ein zu transportierender Stapel aus zwei Silos mit voller Länge ihrer Standbeine mit Sicherheit über eine nach der Straßenverkehrszulassungordnung zulässige Fahrzeughöhe von 4 m hinausreicht. Bei der erfindungsgemäßen Mehrwegverpackung wird die Stapelbarkeit dagegen erreicht durch Verwendung von Silos mit unterteilten Standbeinen, die aus einem vom Silokörper nach unten vorstehenden Grundabschnitt und wenigstens einem Verlängerungsabschnitt bestehen.

Bei abgenommenen Verlängerungsabschnitten können die Silos gefüllt oder leer ohne weiteres zu einem Stapel aufeinandergestellt werden, wobei ein solcher Stapel problemlos transportierbar ist.

Größtmögliche Füllkapazität eines einzelnen Silokörpers ist zweckmäßigerweise dadurch gegeben, daß die Silos allein mit den Standbein-Grundabschnitten bei einem Stapel von zwei aufeinandergestellten Silos eine Gesamthöhe von mehr als etwa 3,7 m nicht überschreiten. Bei Berücksichtigung einer ausreichenden Fahrzeughöhe wird die Gesamthöhe der Silos jedoch geringer als 3,7 m zu wählen sein; denn eine flacherer Bauhöhe eines Fahrzeuges als 0,3 m wird in der Praxis kaum vorkommen, so daß eine Gesamthöhe von mehr als 3,7 m zwar möglich aber auch nicht zweckmäßig ist.

Wie eingangs beschrieben, sind Einrichtungen und organisatorische Maßnahmen für die Rückführung von Paletten im einschlägigen Handel und Gewerbe bereits häufig vorhanden, sowie auch die Transport- und Umschlagmittel für Paletten. Dementsprechend sind die Abmessungen von Paletten genormt und sind die Transport- und Umschlagmittel daran ebenfalls angepaßt.

Nach einer zweckmäßigen Weiterbildung ist bei der erfindungsgemäßen Verpackung vorgesehen, daß eine vom Silokörper mit den Grundabschnitten eingenommene Grundfläche Kanten von nicht mehr als 1,2 m Länge aufweist.

Damit ist die erfindungsgemäße Mehrweg-Verpackung an die genormten Abmessungen von Paletten angepaßt. Ist der Silokörper zylindrisch ausgebildet, kann er einen Durchmesser von 1,2 m aufweisen, wobei in den Ecken einer quadratischen Grundfläche außen am zylindrischen Silokörper die Standbeine problemlos angebracht werden können. In vorteilhafter Weise wird dadurch die durch das genormte Palettenmaß vorgeschriebene Grundfläche von 1,2 m Kantenlänge nicht durch die angebauten Standbeine überschritten.

Wie bereits erwähnt, können die erfindungsgemäß als Silo ausgebildeten Verpackungen aufeinandergestapelt werden, wenn die Verlängerungsabschnitte der Standbeine abgenommen sind. Nach einer anderen zweckmäßigen Weiterbildung ist ein Verlängerungsabschnitt an einem zugeordneten Grundabschnitt um eine waagerechte Achse klappbar so angelenkt, daß sich der Verlängerungsabschnitt in nach unten abgeklappter Stellung etwa parallel zum Grundabschnitt erstreckt und in nach oben abgeklappter Stellung etwa lotrecht steht. Dies ermöglicht die Verlängerungsabschnitte der Standbeine stets mitzuführen, womit der als Verpackung genutzte Silo jederzeit aufstellbereit ist.

Ein Silo kann wie üblich über eine oben befindliche Deckelöffnung im Herstellerwerk befüllt werden. Befüllte Silos mit hochgeklappten Verlängerungsabschnitten können aufeinandergestapelt werden. Soll der Siloinhalt verbraucht werden, kann ein gefüllter Silo mit einem geeigneten Hebezeug aus dem Stapel herausgehoben werden, und während des Heraushebens können die Verlängerungsabschnitte der Standbeine nach unten abgeklappt werden, womit der Silo aufstellbereit ist. Die untere Auslauföffnung des Silos hat die vorgeschriebene Höhe, so daß der Siloinhalt problemlos auch portionsweise entnehmbar ist. Beispielsweise können an die Auslauföffnung auch Austragsvorrichtungen, Mischvorrichtungen und dergleichen angebaut werden.

Ein erfindungsgemäßer Silo ist als Freifallsilo oder als Drucksilo einsetzbar. Der Silo kann auch mehrere Innenkammern aufweisen, die verschiedenartiges Füllgut enthalten.

Selbstverständlich ist es auch möglich, die Verlängerungsabschnitte umsteckbar bzw. montierbar zu machen, womit es nicht unbedingt auf die Klappbarkeit der Verlängerungsabschnitte ankommt. Die Klappbarkeit ist jedoch besonders dann vorteilhaft, wenn an den freien Enden der Verlängerungsabschnitte z.B. auch die Standfläche vergrößernde Fußplatten angeordnet sind, durch die dann gleichzeitig in nach oben angeklappter Stellung die Abstützelemente gebildet sind. Damit weist die erfindungsgemäße Verpackung die für eine Übereinanderstapelbarkeit mehrerer Silos notwendigen Abstützelemente mit besonderem Vorteil nur dann auf, wenn die Verlängerungsabschnitte der Standbeine auch lotrecht nach oben stehen. Bei nach unten abgeklappten Standbeinen ist eine Stapelbarkeit deshalb nicht möglich, woraus sich ein erheblicher Sicherheitsaspekt ergibt.

Darüber hinaus sind auch Verriegelungselemente für eine lösbare Festsetzung der Verlängerungsabschnitte in ihren Klappendstellungen vorgesehen. Verriegelungselemente können z.B. Steckbolzen umfassen, aber auch jede andere Art von betätigbaren Verriegelungselementen ist möglich, die es erlaubt, eine Verriegelung vorzunehmen bzw. wieder zu lösen, um die Verlängerungsabschnitte entweder zur Verlängerung der Standbeine zu benutzen oder zwecks Mitführung am Silokörper zu halten oder zu befestigen.

Nach einer anderen Weiterbildung zeichnet sich die erfindungsgemäße Verpackung dadurch aus, daß am freien Ende jedes Grundabschnittes eine Tasche für eine formschlüssige Aufnahme der am angeklappten Verlängerungsabschnitt eines im Stapel darunter befindlichen Silos vorhandenen Fußplatte angeordnet ist.

Jede Fußplatte am freien Ende eines hochgeklappten Verlängerungsabschnittes bildet somit ein Abstützelement, das formschlüssig in eine Tasche am freien Ende jedes Grundabschnittes eines darüberstehenden Silos eingreift. Der im Stapel untere Silokörper ist dadurch in vorteilhafter Weise nicht durch einen darüberstehenden Silo belastet. Die Last eines oberen Silos wird von seinen Grundabschnitten auf die Fußplatten der Verlängerungsabschnitte des darunterstehenden Silos übertragen und von den Verlängerungsabschnitten wiederum über das Gelenk in die zugeordneten unteren Grundabschnitte, mit denen der Stapel letztlich auf einem Erdboden, einer Fahrzeugpritsche oder dergleichen steht.

Die formschlüssige Aufnahme hat dabei noch den Vorteil, daß sich die aufeinandergestellten Silos zentrieren und dabei auch die Gefahr eines Verrutschens vermindert ist.

Jede Tasche ist zwischen an jedem Grundabschnitt angeordneten Wangen ausgebildet.

Die Wangen können aus zugeschnittenen starken Blechen gefertigt sein, die außen an die Grundabschnitte angesetzt sind, so daß zwischen ihnen ein Freiraum besteht, zwischen denen das freie Ende eines Verlängerungsabschnittes mit seiner Fußplatte entsprechend formschlüssig aufnehmbar ist. Darüber hinaus kann bei entsprechender Länge der Wangen auch die Anlenkung der Verlängerungsabschnitte mit einem quer durch die Wangen verlaufenden Bolzen erfolgen, mit dem Vorteil, daß die Verlängerungsabschnitte dabei wenigstens zum Teil in ihren Schwenkendstellungen zwischen den Wangen mit aufgenommen sind, wodurch eine feste Seitenführung erreicht wird. Dies verbessert die Standfestigkeit und Belastbarkeit.

An unteren freien Enden der Grundabschnitte sind desweiteren deren Standfläche vergrößernde Standplatten angeordnet. Die Standplatten können aus entsprechend abgebogenen unteren Enden der Wangen geformt sein.

Vorzugsweise sind die Grundabschnitte in einem Winkel von etwa 14° zur Lotrechten nach außen gespreizt. Dadurch erhöht sich die Standfestigkeit der als Silo ausgebildeten Verpackungen. Gleichzeitig hat die Spreizung den Vorteil, daß die Fußplatten an den freien Enden der Verlängerungsabschnitte ebenfalls entsprechend geneigt sind und dann, wenn die Verlängerungsabschnitte nach oben an den Silokörper angeklappt sind, ebenfalls schräg geneigte Abstützelemente für einen daraufstehenden Silo bilden, durch die eine Zentrierung eines darauf stehenden zweiten Silos erfolgt. Die Last des daraufstehenden zweiten Silos bewirkt bei schrägen Abstützelementen, daß die hochgeklappten Verlängerungsabschnitte zum Zentrum des Silos hin gedrückt werden. Damit sind keine weiteren Verriegelungs- und Befestigungsmaßnehmen dann erforderlich, wenn die Ausbildung derart getroffen ist, daß die Verlängerungsabschnitte in hochgeklappter Stellung an die Außenwand des Silokörpers angelegt sind.

Bei einer Anpassung des Fassungsvermögens und des Durchmessers des Silokörpers an ein genormtes Palettenmaß mit 1,2 m Kantenlänge ist dies ohne weiteres der Fall, wenn die Verlängerungsabschnitte so bemessen werden, daß sie mit ihren Fußplatten im hochgeklappten Zustand oberhalb des gewölbten Silokörperdeckels stehen und dann etwa im Bereich des Schnittpunktes mit den gespreizten Grundabschnitten der Standbeine mit den an den Grundabschnitten befindlichen Wangen über einen Gelenkbolzen verbunden sind.

Eine weitere zweckmäßige Ausgestaltung der erfindungsgemäß als Silo ausgebildeten Verpackung sieht vor, daß an der Unterseite des Silokörpers Aufnahmetaschen für Gabelstaplerzinken angeordnet sind. Die gespreizten Grundabschnitte der Standbeine können durch Quertraversen abgestützt sein, wobei zweckmäßigerweise die Aufnahmetaschen für die Gabelstaplerzinken an den Quertraversen angeordnet sind. Ein Gabelstapler kann mit seinen Zinken dann von außen zwischen zwei zueinander benachbarte Grundabschnitte eingreifen, bis die Zinken in die entsprechenden Aufnahmetaschen eingeführt sind. Die Aufnahmetaschen sind bei vier Standbeinen und dementsprechend auch vier Quertraversen so angeordnet, daß von jeweils zwei gegenüberliegenden Seiten zwischen jeweils einem Paar zueinander benachbarter Standbeine aus ein Eingriff mit den Gabelstaplerzinken möglich ist. Jede Aufnahmetasche kann z.B. als einfaches, an eine Quertraverse angeschweißtes Kasten- oder U-Profil ausgebildet sein. Selbstverständlich können auch die Quertraversen selbst, bei entsprechend stabiler Bauausführung, als Auflager für Gabelstaplerzinken benutzt werden.

An der Oberseite des Silokörpers sind desweiteren Beschlagelemente, z.B. Kranösen, zum Anschlagen von Lasthebemitteln eines Hebezeuges angeordnet. Damit kann ein gefüllter oder leerer Silo auch gekrant werden. Während des Kranens oder während des Anhebens mit einem Gabelstapler können selbstverständlich die Verlängerungsabschnitte umgeklappt oder ummontiert werden, um den als Verpackung verwendeten Silo auf den verlängerten Standbeinen aufzustellen oder, bei von den Grundabschnitten abgenommenen bzw. hochgeklappten Verlängerungsabschnitten, zu stapeln.

Ein Ausführungsbeispiel der Erfindung, aus dem sich weitere erfinderische Merkmale ergeben, ist in der Zeichnung dargestellt. Es zeigen:
- Fig. 1: eine Seitenansicht einer als Silo ausgebildeten Mehrwegverpackung,
- Fig. 2: eine Draufsicht der als Silo ausgebildeten Mehrwegverpackung gemäß Fig. 1,
- Fig. 3: einen Stapel aus zwei übereingestellten, als Silo ausgebildeten Mehrweg-Verpackungen gemäß Fig. 1 in Seitenansicht und
- Fig. 4: eine durch Einkreisung in Fig. 3 gekennzeichnete Einzelheit IV in vergrößertem Maßstab.

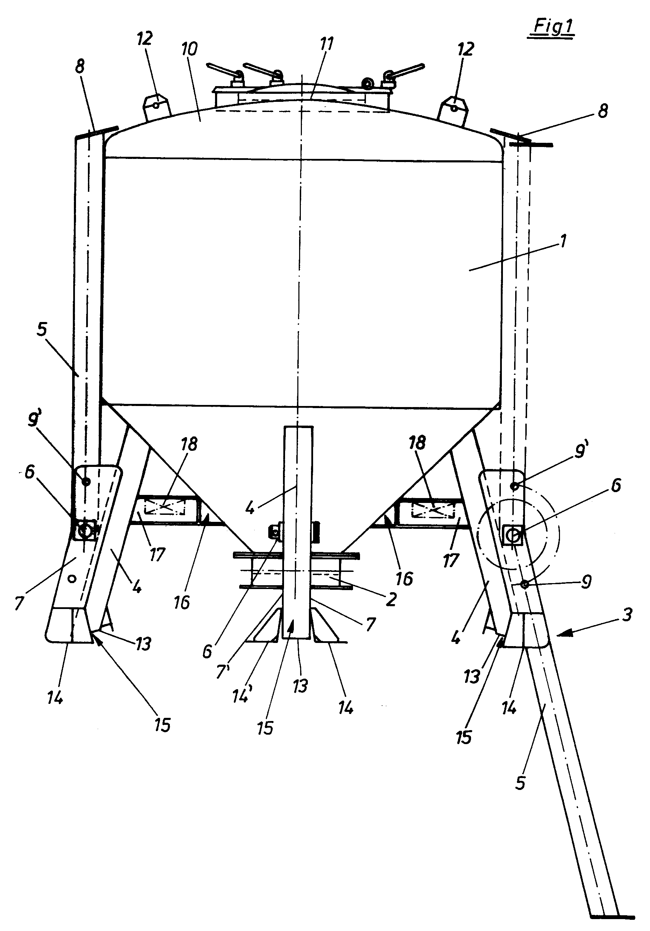

In Fig. **1** ist eine als Silo ausgebildete Mehrwegverpackung schematisch in der Seitenansicht dargestellt. Der als Mehrwegverpackung eingesetzte Silo besteht aus einem zylindrischen Silokörper 1 mit unterem Auslauf 2 und Standbeinen 3. Jedes Standbein umfaßt einen unter einem Winkel von 14° zur Lotrechten von der Unterseite des Silokörpers 1 gespreizt abstehenden Grundabschnitt 4 sowie jeweils einen zugeordneten Verlängerungsabschnitt 5. Jeder Verlängerungsabschnitt 5 ist bei dem hier dargestellten Ausführungsbeispiel um eine waagerechte Klappachse 6 klappbar am jeweils zugehörigen Grundabschnitt 4 angelenkt. Dazu sind an jedem Grundabschnitt 4 zwei zueinander parallel angeordnete, nach außen vorstehende Wangen 7 und 7' angeordnet, die mit der einen Bolzen umfassenden Klappachse 6 ausgerüstet sind und die den Verlängerungsabschnitt 5 in jeweiligen Klappendstellungen seitlich umfassen.

An der linken Seite ist der Verlängerungsabschnitt 5 in einer nach unten abgeklappten Stellung gezeichnet. Bei Abklappung sämtlicher Verlängerungsabschnitte, bei diesem Ausführungsbeispiel von vier Verlängerungsabschnitten, steht der Silokörper 1 auf den freien Enden der Verlängerungsabschnitte, die mit Fußplatten 8 ausgerüstet sind, wobei sich der Auslauf 2 in einer vorgeschriebenen Höhe über der Standebene befindet.

Dabei sind die Schwenkendstellungen der Verlängerungsabschnitte durch entsprechende, hier lediglich angedeutete Verriegelungselemente 9 bzw. 9', die z.B. als Steckbolzen umfassen, welche die Wangen 7 und 7' und den Verlängerungsabschnitt 5 durchdringen, arretierbar.

Auf der rechten Seite der Fig. 1 ist ein Verlängerungsabschnitt 5 in hochgeschwenkter, an die Außenwand des Silokörpers 1 angeklappter Stellung dargestellt. Rechts ist die gleiche angeklappte Stellung durch strichpunktierte Linien angedeutet. In den angeklappten Stellungen kann eine Verriegelung wieder durch Verriegelungselemente 9' erfolgen.

Die Fußplatten 8 an den freien Enden der Verlängerungsabschnitte 5 befinden sich dabei im oberen Bereich des Silokörpers 1. Der Silokörper ist oben durch eine gewölbte Decke 10 verschlossen, in der sich eine zentrale Einfüllöffnung 11 befindet, die mit einem Deckelverschluß verschließbar ist. An der gewölbten Decke 10 sind außen Beschläge 12 angeordnet, die hier als Kranösen ausgebildet sind, so daß der gesamte Silo gekrant werden kann.

Die unteren freien Enden 13 der Grundabschnitte 4 der Standbeine 3 sind schräg zugeschnitten und bilden zusammen mit zu Standplatten 14 bzw. 14' nach außen abgebogenen verlängerten Überständen der Wangen 7 und 7' eine Tasche 15 zur formschlüssigen Aufnahme der an jedem angeklappten Verlängerungsabschnitt 5 eines im Stapel darunter befindlichen Silos vorhandenen Fußplatte 8.

Jeder Grundabschnitt 4 eines Standbeines 3 ist über Quertraversen 16 am Silokörper 1 abgestützt. Die Quertraversen verlaufen radial zum zylindrischen Silokörper, der einen trichterförmigen unteren Bereich hat, welcher im Auslauf 2 endet.

In diesem unteren Bereich sind Aufnahmetaschen 17 für hier lediglich angedeutete Gabelstaplerzinken 18 vorhanden. Die Aufnahmetaschen 17 für die Gabelstaplerzinken 18 sind so ausgerichtet, daß ein Gabelstapler mit seinen Zinken zwischen jeweils zueinander benachbarte Standbeine 3 greifen kann.

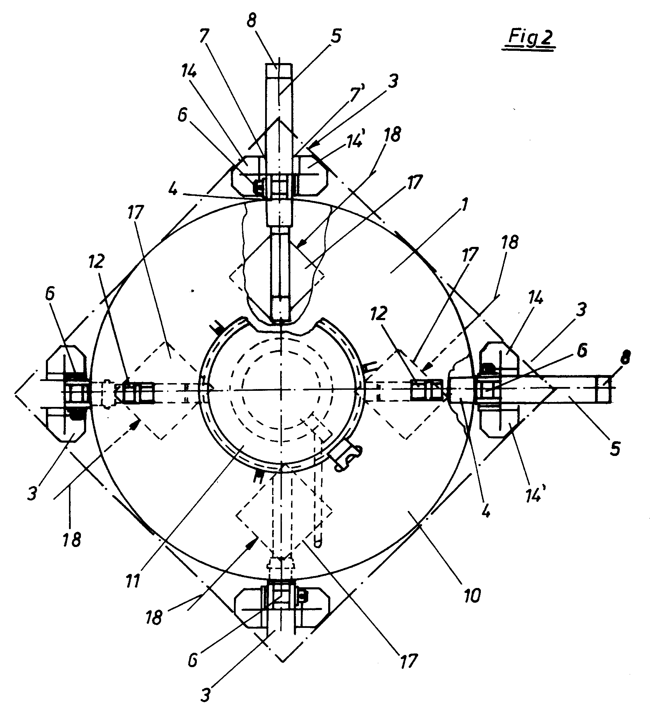

Fig. 2 zeigt eine Draufsicht auf den als Mehrwegverpackung dienenden Silo gemäß Fig. 1. Gleiche Bauteile sind mit gleichen Bezugszahlen bezeichnet. Fig. 2 verdeutlicht, daß der Silokörper 1 zylindrisch ausgebildet ist und über vier Standbeine 3 verfügt.

Die Aufnahmetaschen 17 für die Gabelstaplerzinken sind durch gestrichelte Linien angedeutet, wobei die Gabelstaplerzinken 18 durch die ihre Einschubrichtung in die Aufnahmetaschen 17 angebenden Pfeile angedeutet sind.

Eine Grundfläche, die vom Silokörper 1 mit den Standbeinen 3 eingenommen wird, ist durch strichpunktierte Linien ebenfalls angedeutet, wodurch erkennbar ist, daß die Kantenlänge der eingenommen Grundfläche einem genormten Palettenmaß von 1,2 m entsprechen kann. Der Silokörper 1 eines als Mehrwegverpackung geeigneten Silos kann bei geringster Grundfläche größtmöglichen Durchmesser und somit maximales Fassungsvolumen aufweisen, weil die Standbeine mit Vorteil in den jeweils von den Ecken der Grundfläche und der äußeren Mantelfläche des zylindrischen Silokörpers begrenzten freien Räumen angeordnet sind.

Dies ermöglicht, als Mehrwegverpackung dienende Silos wie Paletten zu handhaben, wobei ohne weiteres übliche Umschlagmittel, Transportmittel und Hebezeuge einsetzbar sind. Wie Paletten können die als Silos ausgebildeten Mehrwegverpackungen auch gestapelt werden.

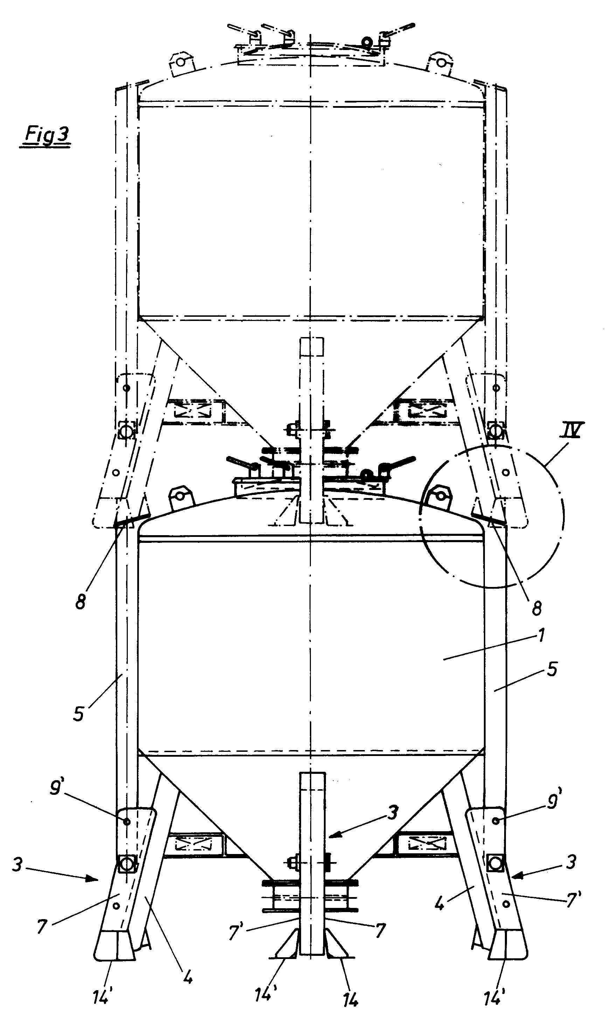

Dies ist in Fig. 3 dargestellt. Fig. 3 zeigt einen auf seinen Grundabschnitten 4, bzw. den Standplatten 14 und 14' der mit den Grundabschnitten 4 verbundenen Wangen 7,7' stehenden Silo, bei dem die Verlängerungsabschnitte 5 sämtlicher Standbeine 3 hochgeschwenkt und an den Silokörper 1 angeklappt sind. Eine Verriegelung kann dabei mit den Verriegelungselementen 9,9' erfolgen.

Ein zweiter, gleich ausgebildeter Silo, bei dem die Verlängerungsabschnitte ebenfalls hochgeschwenkt und angeklappt sind, kann mittels eines Hebezeuges oder eines Gabelstaplers auf den unteren Silo gestellt werden. Der obere Silo steht dabei mit den freien Enden der Grundabschnitte seiner Standbeine auf den Fußplatten 8 an den freien Enden der hochgeklappten Verlängerungsabschnitte 5 der Standbeine 3 des unteren Silos. Dabei sind die schrägstehenden Fußplatten 8 in den Taschen an den freien Enden der Grundabschnitte der Standbeine des darübergestellten Silos aufgenommen.

Die besonders vorteilhafte Verwendung der Fußplatten 8 der hochgeklappten Verlängerungsabschnitte 5 als Abstützelemente für ein aufgestapeltes zweites Silo hat den Vorteil, daß die als Mehrwegverpackung dienenden Silos nur dann gestapelt werden können, wenn die Verlängerungsabschnitte hochgeklappt sind. Auf einen Silo, das betriebsbereit zur Abgabe von Füllgut auf den heruntergeklappten Verlängerungsabschnitten seiner Standbeine steht, kann ein zweiter Silo nicht aufgestapelt werden, da keine Abstützelemente vorhanden sind.

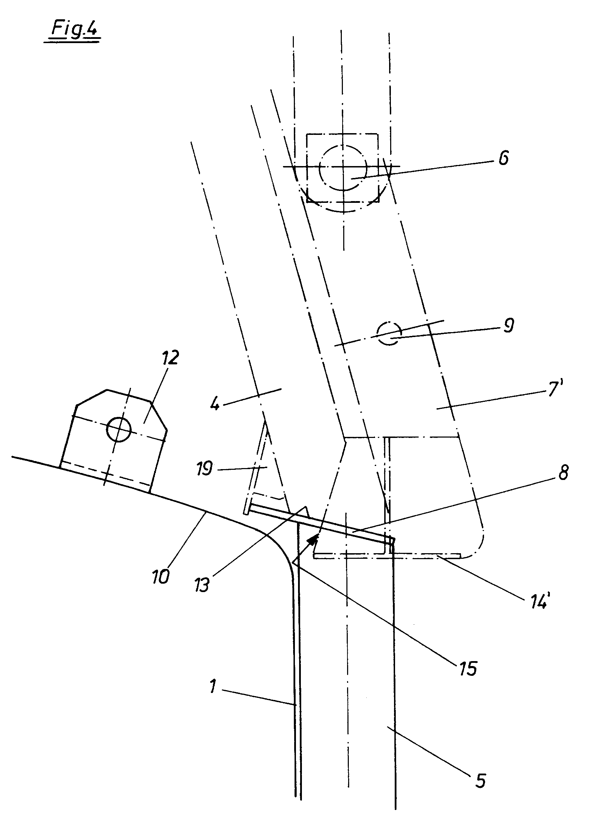

Fig. 4 zeigt die durch Einkreisung gekennzeichnete Einzelheit IV aus Fig. 3 in vergrößertem Maßstab. Gleiche Bauteile sind mit gleichen Bezugszahlen bezeichnet. Fig. 4 verdeutlicht, wie die Fußplatte 8 am hochgeklappten Verlängerungsabschnitt 5 eines im Stapel aus Silos unten befindlichen Silo formschlüssig an das untere freie Ende 13 eines Grundabschnittes 4 eines darübergestellten Silos angeschmiegt ist und dabei formschlüssig in die Tasche 15 zwischen den Wangen 7 und 7' am Grundabschnit 4 des darübergestellten Silos eingreift. Ein Anschlagblech 19, das im Bereich des unteren freien Endes jedes Grundabschnittes 4 angeordnet ist, sichert einen festen Sitz der als Abstützelement dienenden Fußplatte 8 in der Tasche 15.

## Patentansprüche

1. Mehrweg-Verpackung für fließ- und/oder rieselfähige Massengüter,
**dadurch gekennzeichnet,**
daß sie als einen Silokörper (1) mit Standbeinen (3) und unterem Auslauf (2) aufweisender Silo ausgebildet ist, wobei jedes Standbein (3) aus einem vom Silokörper (1) nach unten vorstehenden Grundabschnitt (4) und wenigstens einem Verlängerungsabschnitt (5) besteht und wobei Abstützelemente (Fußplatten 8) für einen auf den Silo stellbaren zweiten Silo vorgesehen sind und daß die Höhe eines Silos mit Standbein-Grundabschnitten (4) so bemessen ist, daß bei einem aus wenigstens zwei aufeinandergestellten Silos gebildeten Stapel dessen Gesamthöhe nicht mehr als etwa 3,7 m ist.

2. Verpackung nach Anspruch 1, dadurch gekennzeichnet, daß eine vom Silokörper (1) mit den Grundabschnitten (4) eingenommene Grundfläche Kanten von nicht mehr als 1,2 m Länge aufweist.

3. Verpackung nach Anspruch 1 und/oder 2, dadurch gekennzeichnet, daß ein Verlängerungsabschnitt (5) an einem zugeordneten Grundabschnitt (4) um eine waagerechte Achse (6) klappbar so angelenkt ist, daß sich der Verlängerungsabschnitt (5) in nach unten abgeklappter Stellung etwa parallel zum Grundabschnitt (4) erstreckt und in nach oben angeklappter Stellung etwa lotrecht steht.

4. Verpackung nach einem der Ansprüche 1 bis 3, dadurch gekennzeichnet, daß an den freien Enden der Verlängerungsabschnitte (5) Fußplatten (8) angeordnet sind und daß in nach oben angeklappter Stellung der Verlängerungsabschnitte (5) durch die Fußplatten (8) die Abstützelemente gebildet sind.

5. Verpackung nach einem der Ansprüche 1 bis 4, dadurch gekennzeichnet, daß Verriegelungselemente (9,9') für eine lösbare Festsetzung der Verlängerungsabschnitte (5) in ihren Klappendstellungen vorgesehen sind.

6. Verpackung nach einem der vorhergehenden Ansprüche, dadurch gekennzeichnet, daß am freien Ende (13) jedes Grundabschnittes (4) eine Tasche (15) für eine formschlüssige Aufnahme der am angeklappten Verlängerungsabschnitt (5) eines im Stapel darunter befindlichen Silos vorhandenen Fußplatte (8) angeordnet ist.

7. Verpackung nach Anspruch 6, dadurch gekennzeichnet, daß jede Tasche (15) zwischen an jedem Grundabschnitt (4) angeordneten Wangen (7,7') ausgebildet ist.

8. Verpackung nach einem der Ansprüche 1 bis 7, dadurch gekennzeichnet, daß an unteren freien Enden (13) der Grundabschnitte (4) deren Standfläche vergrößernde Standplatten (14, 14') angeordnet sind.

9. Verpackung nach den Ansprüchen 7 und 8, dadurch gekennzeichnet, daß die Standplatten (14,14') an den Wangen (7,7') angeordnet sind.

10. Verpackung nach einem der vorhergehenden Ansprüche, dadurch gekennzeichnet, daß die Grundabschnitte (4) in einem Winkel von etwa 14° zur Lotrechten nach außen gespreizt sind.

11. Verpackung nach einem der vorhergehenden Ansprüche, dadurch gekennzeichnet, daß an der Unterseite des Silokörpers (1) Aufnahmetaschen (17) für Gabelstaplerzinken (18) angeordnet sind.

12. Verpackung nach einem der Ansprüche 1 bis 11, dadurch gekennzeichnet, daß an der Oberseite des Silokörpers (1) Beschlagelemente (12) zum Anschlagen von Lasthebemitteln eines Hebezeuges angeordnet sind.

13. Verpackung nach einem der Ansprüche 1 bis 12, dadurch gekennzeichnet, daß die gespreizten Grundabschnitte (4) abstützende Quertraversen (16) vorgesehen sind und daß die Aufnahmetaschen (17) für Gabelstaplerzinken (18) an den Quertraversen (16) angeordnet sind.
